# EUROPEAN PATENT APPLICATION

(11) **EP 1 243 825 A1**
(43) Date of publication of application: **25.09.2002**
(21) Application number: 02380061.8
(22) Date of filing: 18.03.2002
(51) Int. Cl.: F16K 11/078, F16K 31/60, F16K 35/04

(54) **Mixing valve with flow regulation device**

(30) Priority: 22.03.2001 ES 200100677
(71) Applicant: Industrias Ramon Soler, S.A., 08970 Sant Joan Despi (ES)
(72) Inventor: Ferret Picazo, Xavier, 08970 Sant Joan Despi (ES)
(74) Representative: Ponti Sales, Adelaida

(57) **Abstract**

It includes a fixed ceramic disc (2) and a movable ceramic disc (3) housed inside a housing (1), the fixed disc (2) including a pair of cold and hot water inlet openings and an outlet opening (6) for the mixture of water, while the movable disc (3) includes a distribution opening (7), the movable disc (3) being attached to an actuating lever (4), including elastic means (8, 9) which limit actuation of said lever (4) to a certain position, in which the output flow of water is limited to a set value, while the lever (4) can be placed in a second position for output of the maximum flow against the action of said elastic means (8, 9), and it is characterised in that said elastic means (8, 9) for limiting actuation of the lever are mounted in detachable manner around said lever (4).

The limiting means can be removed or replaced easily whenever the user so wishes.

## Description

This invention relates to a fluids mixer valve with flow regulation which permits the flow of water to be regulated by means of a predetermined opening position and, if wished, permits maximum flow to be achieved.

The currently known mixer valves of single-lever type are made up of:
- a fixed ceramic disc provided with an orifice for the entry of cold water, an orifice for the entry of hot water and an orifice for output of the mixed water;
- a movable ceramic disc provided with a distribution opening, with the position of said movable disc with respect to the fixed disc determining the temperature of the water which flows from the valve and its flow; and
- an actuating lever attached to the movable disc, through which is actuated the movement of the movable disc.

Through said actuating lever the user can determine the desired degree of mixing of the hot and cold water and the flow of water, depending on the use being made at that time.

The mixture of cold and hot water is determined by the angular position of the movable disc with respect to the fixed disc, and depends on the position of the distribution opening with respect to the cold and hot water inlet orifices. Thus, by turning the actuating lever the user can regulate the temperature of the water coming out of the valve.

The flow of water is determined by the relative position of the movable disc on the fixed disc, so that the distribution opening covers a smaller or larger surface area of the hot and cold water input orifices.

It has been found in practice, however, that users open the valve fully, making the water emerge at maximum flow in all cases. These means that unnecessary water expenditure occurs, since a smaller flow of water is sufficient in many cases, such as for washing the hands.

In order to solve these disadvantages, the holder of this application designed the mixer valve with flow limitation described in Spanish utility model U9903214. That utility model discloses four different embodiments, which have in common the characteristic that the means for limiting the movement of the actuating lever are elastic and fixed, that is, they cannot be removed at the wish of the user.

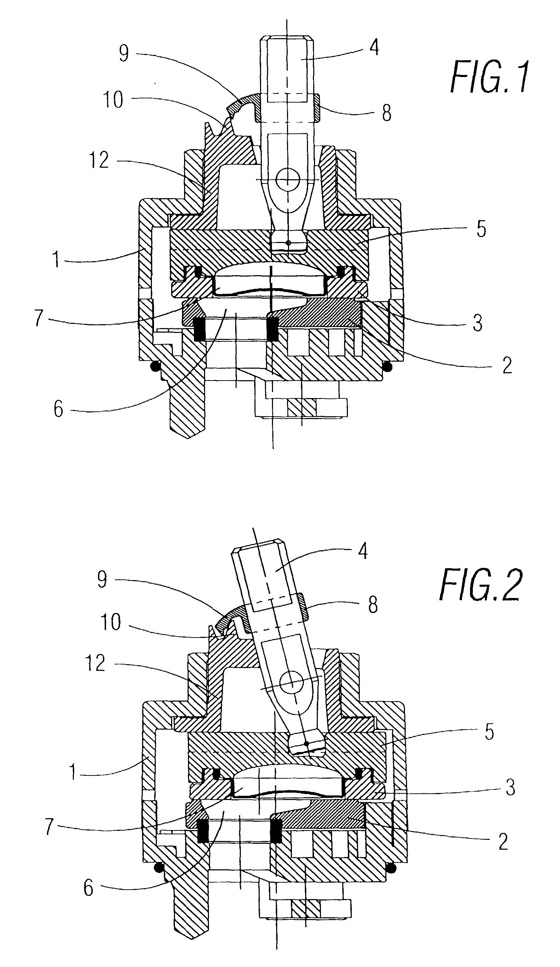

More specifically, in the embodiments shown in Figures 1 and 2 of said utility model, the elastic regulating means are mounted on the movable disc. In these embodiments, the limiting means have to be fitted when the valve is fitted.

In the embodiments shown in Figures 3 and 4 of said utility model, the elastic limiting means are mounted on the actuating lever, but are not mounted in movable manner. Furthermore, the elastic part of said limiting means is mounted on the valve housing.

The mixer valve of this invention manages to resolve the aforesaid disadvantages, while presenting other advantages which will be described.

The fluids mixer valve of this invention is characterised in that said elastic means for limiting actuation of the lever are mounted in detachable manner around said lever.

Thanks to this characteristic, the limiting means can be removed easily whenever the user so wishes, to provide a valve without flow limitation. Moreover, in the event of deterioration of the elastic means they can be replaced conveniently.

According to a preferred embodiment of this invention, said elastic means are made up of a ring provided with a lug of elastic material, in such a way that in said first position the lug abuts against a projecting piece attached to the valve housing, and the lever can be moved into said second position against the action of said projecting piece.

For a better understanding of all that has been described in this specification some drawings are attached which, solely by way of example, show a practical case of embodiment of the mixer valve of this invention.

In said drawings, Figure 1 is an elevation view of the mixer valve of this invention in cross-section, with the actuating lever in the position which permits outlet of half the maximum flow; and

Figure 2 is an elevation view of the mixer valve of this invention in cross-section, with the actuating lever in the position which permits outlet of the maximum flow.

Figure 1 shows an embodiment of the mixer valve of the invention. As is known in the art and usual in all mixer valves of the single-lever type, the valve includes a housing 1 inside which are housed a fixed disc 2 and a movable disc 3. The mixer valve also includes an actuating lever 4 attached to the movable disc 3 through an additional piece 5 attached to the movable disc 3.

The position of the movable disc 3 determines the output flow of the water and the output temperature of the water. For this purpose, the fixed disc 2 includes a pair of cold and hot water inlet openings (not shown in the figure) and an outlet opening 6 for the mixture of water. The movable disc 3 includes a distribution opening 7. In this way, rotation of the movable disc 3 on the fixed disc 2 will determine the output temperature of the water, and lineal movement of the movable disc 3 on the fixed disc 2 will determine the output flow of the water.

According to the invention, the mixer valve includes elastic means for limiting the output flow of water. These elastic means are made up of a ring 8 mounted around said lever 4. This ring 8 includes a lug 9 of elastic material which abuts against a projecting piece 10 provided on a piece 12 attached to the housing 1 of the valve, as shown in Figure 1.

The ring 8 is mounted detachably on the lever 4, so that if the user so wishes it can be removed manually in order to provide a valve without flow regulation.

When the ring 8 is placed in position and the lever 4 is actuated, there comes a moment when the lug 9 of said ring 8 comes into contact with the projecting piece 10 (Figure 1), limiting the output of water. Said position has been designed to correspond to approximately half of the maximum flow.

If it is desired for the maximum flow of water to emerge the user has to exercise greater pressure on the lever 4, in such a way that the lug 9, thanks to its elastic nature, cedes before the opposition of said projecting piece 10.

In order to return the lever 4 to its original position, that lever has be actuated in the opposite direction, with substantially lower pressure being needed for said lug 9 to cede before the opposition of said projecting piece 10 in the opposite direction.

Despite the fact that reference has been made to one specific embodiment of the invention, it will be obvious to a person skilled in the art that the mixer valve disclosed allows of many variations and modifications, and that all the details mentioned can be replaced by others that are technically equivalent, without departing from the sphere of protection defined in the attached claims.

## Claims

1. Fluids mixer valve with regulation of the output flow of the fluid, which includes a fixed ceramic disc (2) and a movable ceramic disc (3) housed inside a housing (1), the fixed disc (2) including a pair of cold and hot water inlet openings and an outlet opening (6) for the mixture of water, while the movable disc (3) includes a distribution opening (7), the movable disc (3) being attached to an actuating lever (4), including elastic means (8, 9) which limit actuation of said lever (4) to a certain position, in which the output flow of water is limited to a set value, while the lever (4) can be placed in a second position for output of the maximum flow against the action of said elastic means (8, 9), **characterised in that** said elastic means (8, 9) for limiting actuation of the lever (4) are mounted in detachable manner around said lever (4).

2. Mixer valve as claimed in Claim 1, **characterised in that** said elastic means are made up of a ring (8) provided with a lug (9) of elastic material, in such a way that in said first position the lug (9) abuts against a projecting piece (10) attached to the valve housing (1), and the lever (4) can be moved into said second position against the action of said projecting piece (10).
